# EUROPEAN PATENT APPLICATION

(11) **EP 3 042 572 A1**
(43) Date of publication of application: **13.07.2016**
(21) Application number: 14198254.6
(22) Date of filing: 16.12.2014
(51) Int. Cl.: A23K 10/10, A23K 10/40, A23K 50/00

(54) **A method for feeding animals, especially poultry, and a composition related thereto comprising vegetable proteins**

(71) Applicant: Nummela, Marko, 31500 Koski TL (FI); Nummela, Kirsi, 31500 Koski TL (FI)
(72) Inventor: Nummela, Marko, 31500 Koski TL (FI); Nummela, Kirsi, 31500 Koski TL (FI)
(74) Representative: Kolster Oy Ab

(57) **Abstract**

The present invention belongs to the field of farming and raising animals. The present invention relates to a method for feeding poultry, with specific type of feed and to a specific composition for animal feed. Furthermore, the present invention relates to an animal feed comprising the composition of the present invention, use of the animal feed of the present invention for feeding poultry and poultry meat obtainable from poultry, which has been fed by the feeding method of the present invention.

The composition comprises sources of vegetable protein, preferably selected from the combination of wheat, Pisum sativum (pea), oat and vicia faba (bean) or from the combination of wheat, Pisum sativum (pea), oat and zea mays (corn, mais).

## Description

### FIELD OF THE INVENTION

The present invention belongs to the field of farming and raising animals. The present invention relates to a method for feeding poultry, with specific type of feed and to a specific composition for animal feed. Furthermore, the present invention relates to an animal feed comprising the composition of the present invention, use of the animal feed of the present invention for feeding poultry and poultry meat obtainable from poultry, which has been fed by the feeding method of the present invention.

### BACKGROUND OF THE INVENTION

In the past improvements and developments of the industry for raising meat producing animals such as poultry (e.g. broilers or chickens) have been made essentially in the hope of increasing meat production and lowering the productions costs. There are specific feeding programs and products for different animal species at different stages of production and growth. Various substances may be utilized in feeds, e.g. enzymes, betaine, organic acids, short and medium chain fatty acids, vitamin preparations as well as organic selenium and zinc, for promoting the growth of an animal. Also, the development of resistance against diseases has become increasingly important as the unit sizes of animal (e.g. poultry) houses have grown and hygienic quality requirements of meat are very high. For example EP0981967 A1 describes a feed composition for broilers, which contains coenzyme Q and has a metabolizable energy value of not smaller than 3150 kcal/kg. Said feed composition was developed for preventing ascites of broilers while keeping a suitable raising rate so as to improve the growth rate and shorten the growing period as well as attain high productivity.

However, a significant decrease in the quality of the food that is produced, due to e.g. too fast muscle growth in an animal during too short breeding period or the type of feed used for animal growth and fattening, has been noticed by consumers.

Also, ethically and ecologically conscious manufacturing has become an obligation to the western society. Consumers are keen on production methods of the meat in question and want to be sure of the animal welfare during farming. For the human health aspects and well-being it is essential to achieve and maintain a better level of meat quality but also, the taste and appearance of meet are important factors for today's demanding consumers.

The farmers should be able to fulfil the requirements of the consumers and at the same time produce meat cost-effectively. For these reasons, animal feed are a tempting target for modifications in order to improve the production of meat and furthermore the characteristics thereof.

In intensive meat production about 40% of livestock feed is soybean. Soybeans are high in protein (about 38%) and therefore they are a major ingredient in livestock feed. In addition to high protein content, soybeans also have many other great advantages. For example soybeans can be produced very effectively, they are inexpensive and their amino acid composition is very optimal for animals, which all factors support the use of soybean in animal feeds. The poultry and swine industries are major consumers of soybean meal. Over half of the soybeans processed for livestock feed are fed to poultry. Most of soybeans are genetically modified (GM) and therefore cause problems with exports to some countries. For example, GM crops require extensive certification before they can be legally imported into the European Union. Also, many suppliers and consumers are reluctant to use GM products for animals. Furthermore, soybeans are mainly produced in the fields hacked from rain forests. Actually, the greatest emerging threat to Amazon rainforests is industrial soy plantations which are claiming bigger swaths of the rainforest.

Overall, there are various and alternating demands for the meat production industry and these requirements of are not fulfilled by animal feed present on the market. Therefore, a need remains for efficient and effective animal feed in order to obtain ethically and economically produced high quality meat.

### BRIEF DESCRIPTION OF THE INVENTION

An object of the present invention is to provide a feeding method and a composition to solve the above problems of animal feed containing soybean, and achieve ethical, ecologic, economic and excellent meat. The objects of the invention are achieved by methods and a composition, which are characterized by what is stated in the independent claims.

The invention is based on the idea of not using soybeans in the animal feed. Indeed, by the present invention it is possible to produce meat, which is not GMO contaminated. It is an object of the present invention to provide a feed composition for livestock (e.g. poultry) making it possible to increase the growth of poultry compared to present conventional organic poultry feeding and to achieve high quality meat.

In intensive meat production, farm unit sizes have expanded and the animal densities have increased locally. Both factors increase the stress and diseases of animals. The composition of the present invention provides high quality feed for the animals and guarantees low disease rates. Therefore, the present invention also provides meat with excellent hygienic quality.

The present invention actually provides a new class of raising poultry for meat production. This can be seen for example in terms of productivity and feeding time. Said class falls between conventional organic breeding or feeding (wherein productivity is about 20 kg/m²/year) and conventional intensive meat production (wherein productivity is about 40 kg/m²/year) when measured by the amount of produced meat. By the present invention it is possible to produce 27-33 kg/m²/year poultry meat. Also, by the present invention the feeding time of broilers is 44-54 days compared to 32-39 days in intensive meat production and 60-70 days in organic breeding.

Indeed, the present invention makes it possible to breed poultry (e.g. broilers) with great accuracy, predictability and efficacy.

In detail, the present invention is based on a very specific combination of components or ingredients for animal feed. The present invention makes it possible to produce the animal feed from local products or ingredients leading to small carbon footprints.

Also, the mouth feeling, taste and appearance of the meat achieved by the present invention is different from the meat available on the market. The texture of meat achieved by feeding poultry with the composition of the present invention is better compared to the poultry (e.g. broiler) meat on the market. The poultry meat obtained by the present invention is similar to meat of game animals, for example usually broiler meat is smooth but the present invention highlights the fibers of the meat. The chewing resistance of the present meat is higher compared to the conventional broiler meat. Also the taste of the meat of the present invention is stronger or better (e.g. more game animal meat like or more native breed chicken meat like) compared to the conventional broiler meat. The broiler meat of the present invention is more solid, juicier and contains more fat than the conventional broiler meat. Usually the weight loss of pan-fried broiler meat is about 25 %. However, the meat of the present invention loses only about 14% of weight in frying revealing that the water content of the meat is lower compared to the conventional broiler meat. High contents of omega fatty acids (e.g. omega-3 and -6 fatty acids) also contribute to the taste of the meat. Usually broiler meat is white, but the meat of the present invention is pinker than the usual broiler meat. One further advantage of the present invention is to provide poultry meat (e.g. broiler meat) of uniform quality.

In addition to characteristics of the meat of the present invention, the consistence of the broiler skin is excellent for pan-frying and the skin tastes very good.

In summary, the present invention provides a low-price, simple and natural composition for animal feed. Controlling feeding of animals is important for maintaining the health of poultry and for satisfactory production of meat.

The present invention relates to a method for feeding poultry, wherein the method comprises providing feed for the poultry, wherein the feed comprises
(i) one or more sources of vegetable protein 60-90% (w/w) and
(ii) vegetable oil and/or vegetable fat 1-10% (w/w) and wherein said feed is free of soybean.

Furthermore, the present invention relates to a composition for animal feed comprising
(i) one or more sources of vegetable protein 60-90% (w/w) and
(ii) vegetable oil and/or vegetable fat 1-10% (w/w) and wherein said composition is free of soybean.

Furthermore, the present invention relates to an animal feed comprising the composition of the present invention.

Still, the present invention relates to use of the animal feed of the present invention for feeding poultry.

And still, the present invention relates to poultry meat obtainable from poultry, which has been fed according to the method of the present invention or with the animal feed of the present invention.

### DETAILED DESCRIPTION OF THE INVENTION

The method of the present invention may be utilized for optimizing feeding of the poultry.

The composition of the present invention may be used in the production of animal feed, in the breeding or in the fattening of poultry. Soybeans are a commonly used source of protein and in the present invention replaced by other types of protein sources. Any type of protein sources well known in the art may be utilized in the present invention. Specifically one or more sources of vegetable protein are present 60-90% (w/w) in the composition or animal feed of the present invention.

As used herein "source of vegetable protein" refers to any vegetable or any part thereof such as a seed, grain, or fruit, which contains proteins, more typically lots of proteins (i.e. protein rich nutrient). Sources of vegetable protein include but are not limited to plants belonging to *Phaseolus* family, plants belonging to *Fabaceae* family, nuts, grains, *Zea mays* (corn), plants belonging to the *Lupinus* family and seeds. In one embodiment of the invention one or more sources of vegetable protein is(/are) selected from the group comprising or consisting of wheat, plants belonging to *Fabaceae* family (e.g. peas (such as *Pisum sativum*) or *Cyamopsis tetragonoloba* (L.) Taub, *Cyamopsis psoraloides* (Lam.) DC., *Dolichos psoraloides* Lam. or *Psoralea tetragonoloba* L.)), oat, *Zea mays,* plants belonging to the *Lupinus* family and plants belonging to *Phaseolus* family (e.g. beans (such as *Vicia faba)).* In specific embodiments of the invention sources of vegetable protein are wheat, *Pisum sativum,* oat, and *Vicia faba* or wheat, *Pisum sativum,* oat, and *Zea mays.* As used herein "a plant belonging to a specific family" as a source of vegetable protein refers to any part of the plant including but not limited to flowers, leaves, stems, pods, beans or seeds (e.g. wheat or oat grains, *Zea mays* kernels or peas or beans). Plants or parts thereof belonging to a specific family, which are suitable for animal feed, may be chosen for the composition of the present invention.

The grains used in the present invention may be pealed, not pealed or there may be a combination of pealed and not pealed grains. In one embodiment at least oat is pealed.

In one embodiment of the feed or composition of the present invention comprises wheat, *Pisum sativum,* oat (optionally pealed), *Vicia faba,* vegetable oil, minerals, feeding lime, and crushed grain of *Brassica rapa* subsp. *oleifera* and/or crushed grain of *Brassica napus* subsp. *oleifera,* specifically about 30-45% (w/w) wheat, about 10-30% (w/w) *Pisum sativum,* about 10-30% (w/w) oat (optionally pealed), about 5-20% (w/w) *Vicia faba,* about 3-7% (w/w) vegetable oil, about 10-18% (w/w) minerals, feeding lime and crushed grain of *Brassica rapa* subsp. *oleifera.* More specifically, the feed or composition comprises 30-45% (w/w) wheat, 10-30% (w/w) *Pisum sativum,* 10-30% (w/w) oat (optionally pealed) and 5-20% (w/w) *Vicia faba.* Alternatively, the feed or composition may comprise 10-20% (w/w) wheat, 20-45% (w/w) *Pisum sativum,* 10-30% (w/w) oat (preferably pealed) and 4-10% (w/w) *Zea mays.* As used herein "% (w/w)" refers to mass fraction i.e. % mass/mass.

In a very specific embodiment of the invention the feed or composition comprises
(i)
   a) wheat 30-45% (w/w)
   b) *Pisum sativum* 10-30% (w/w)
   c) oat (preferably pealed) 10-30% (w/w)
   d) *Vicia faba* 5-20% (w/w)
(ii) vegetable oil and/or vegetable fat 1-10% (w/w)
(iii) crushed grain of *Brassica rapa* subsp. *oleifera* and/or *Brassica napus* subsp. *oleifera*
   (preferably crushed grain of *Brassica rapa* subsp. *oleifera*) 8-15% (w/w) and
(iv) minerals and feeding lime 1-5% (w/w).

Most specifically the feed or composition of the invention comprises 30-45% (w/w) wheat, 10-30% (w/w) *Pisum sativum,* 10-30% (w/w) oat (optionally pealed), 5-20% (w/w) *Vicia faba,* 3-7% (w/w) vegetable oil, 0,5-3% (w/w) minerals, 0,5-2% feeding lime and 11-13% crushed grain of *Brassica rapa* subsp. *oleifera* and/or *Brassica napus* subsp. *oleifera.*

The composition or feed of the present invention comprises 1-10% (w/w) vegetable oil and/or vegetable fat. "Vegetable oil" or "vegetable fat", in this context, refers to oil or fat of vegetable origin obtained by extracting or producing oil or fat from seeds or fruits which are processed for edible purposes. Vegetable oil may be selected from the group consisting of peanut oil, olive oil, *Brassica rapa* subsp. *oleifera* oil, *Brassica napus* subsp. *oleifera* oil, palm oil, pumpkin seed oil, *Zea mays* oil, sunflower oil, safflower oil, grape seed oil, sesame oil, argan oil, rice bran oil, coconut oil, palm oil, palm kernel oil, any vegetable oil well known in the art such as seed oils, nut oils and citrus oils, and any combination thereof. In a specific embodiment the vegetable oil is *Brassica rapa* subsp. *oleifera* oil, *Brassica napus* subsp. *oleifera* oil a combination thereof. In a specific embodiment vegetable oil and/or vegetable fat, preferably vegetable oil, is present 3-7% (w/w). Vegetable fat may be selected from the group consisting of peanut fat, olive fat, *Brassica rapa* subsp. *oleifera* fat, *Brassica napus* subsp. *oleifera* fat, palm fat, pumpkin seed fat, *Zea mays* fat, sunflower fat, safflower fat, grape seed fat, sesame fat, argan fat, rice bran fat, coconut fat, palm fat, palm kernel fat, any vegetable fat well known in the art such as seed fats, nut fats and citrus fats, and any combination thereof.

Furthermore, the composition may comprise enzymes. Enzyme supplementation of livestock diets is nutritionally, economically and environmentally justified. Enzymes are used to increase the energy value of feed ingredients and enhance the utilisation of protein, fats, carbohydrates and mineral compounds such as phytin phosphorus from plant materials, leading to a lower excretion rate of undigested or un-utilized nutrients into the environment and, hence, reduced environmental pollution. This is especially important regarding proteases, as the correct digestion of nitrogenous compounds in feed materials is essential for reducing N excretion. In a specific embodiment of the invention, one or more enzymes are selected from the group consisting of protease, alfa-amylase, pectinase, phytase and any other enzymes well known in the art. Any enzyme suitable for animal feed and not causing harmful effects in the composition or for animals may be utilized in the composition of the present invention. Suitable enzymes are well known to a person skilled in the art.

Furthermore, the composition may comprise a coccidiostate, i.e. an antiprotozoal agent that acts upon Coccidia parasites. The coccidiostat may for example be selected from the group consisting of e.g. amprolium, arprinocid, artemether, clopidol, decoquinate, diclazuril, dinitolmide, ethopabate, halofuginone, lasalocid, monensin, narasin, nicarbazin, oryzalin, robenidine, roxarsone, salinomycin, spiramycin, sulfadiazine, toltrazuril, triazuril, and any other cocciodiostat, or any combination thereof. Cocciostates suitable for the composition of the present invention are well known in the art.

In one embodiment of the invention the feed or composition further comprises minerals, vitamins, enzymes and/or coccidiostates. In another embodiment of the invention, the feed or composition further comprises vitamins, enzymes and/or coccidiostates.

Minerals and vitamins may include any minerals or vitamins well known in the art including but not limited to vitamins K, E, D, C, B₉, B₇, B₆, B₅, B₃, B₂, B₁₂, B₁, A and including but not limited to minerals calcium, phosphorus, potassium, sulfur, sodium, chlorine, magnesium, iron, cobalt, copper, zinc, manganese, molybdenum, iodine, bromine and selenium. The feed or composition of the present invention may comprise one or more vitamins and/or one or more minerals. Suitable minerals and/or vitamins are well known to a person skilled in the art and may be utilized in the composition of the present invention.

Optionally, the composition may comprise ionophores, i.e. lipid-soluble molecules to transport ions across the lipid bilayer of the cell membrane. Ionophores suitable for the composition of the present invention are well known in the art.

Optionally, the composition may comprise any pharmaceutical agents conventionally used in animal feed. Pharmaceutical agents suitable for the composition of the present invention are well known in the art.

The feed composition for animals, most specifically poultry, of the present invention may additionally contain any other optional agents or components that are generally used in ordinary feed compositions.

In a specific embodiment the composition or feed of the present invention is free of genetically modified organisms (GMO). When the produced meat is not contaminated by GMO, the meat is safe and does not have any uncharacterized effects. This feature makes the composition suitable to be delivered or produced in any countries and the meat to be sold for any kind of customers in any countries. As used herein "free of GMO" refers to lack of GMO. As used herein "GMO" refers to an organism whose genetic material has been altered using genetic engineering techniques. Genetic engineering techniques are well known in the field of genetics and are well described for example in books or laboratory manuals of genetic engineering.

Animal proteins (e.g. bone meal or meat and bone meal) are commonly used in animal feed in combination with vegetable proteins in animal feed. In one embodiment of the invention the composition or feed is free of animal proteins. This feature makes the composition or feed of the present invention suitable or optimal for industry because production of vegetable based compositions is more effective and has smaller carbon footprint compared to compositions having animal based ingredients or agents. Also, the composition or feed is safer than animal protein containing products because animal derived diseases are cannot be spread by the present composition. As used herein "free of animal proteins" refers to lack of proteins, which are derived from an animal.

In a specific embodiment, the composition or feed is free of GMO and animal proteins. These characters make it possible to manufacture the composition in any countries and by local ingredients. Furthermore, these features together with the specific combination of ingredients in specific amounts makes the composition or feed effective and excellent for feeding livestock such as poultry.

In one embodiment of the invention, the composition or feed is free of *Zea mays.* In addition to soybeans, *Zea mays* are also widely used source of protein in animal feed and may be genetically modified.

In a very specific embodiment of the invention the composition or feed is free of soya beans, GMO, animal proteins and *Zea mays.*

In one embodiment of the invention, the composition or feed is a Pro-organic composition or feed, respectively. As used herein "Pro-organic" refers to a composition or feed having components, which are produced by utilizing organic farming methods i.e. natural methods (such as natural pesticides or fertilizers bone meal from animals or pyrethrin from flowers), but excluding or limiting the use of various non-natural methods (including synthetic petrochemical fertilizers and pesticides; plant growth regulators such as hormones; antibiotic use in livestock; genetically modified organisms, human sewage sludge and nanomaterials) for reasons including sustainability, openness, independence, health, and safety.

Means and methods for formulating the present feed preparations or compositions are known to persons skilled in the art, and may be manufactured in a manner which is in itself known, for example, by means of conventional mixing, granulating, pelleting, dissolving or similar processes. Suitable formulation methods can be determined readily by those skilled in the art. In one embodiment of the invention the animal feed is in a form of pellets, capsules, crumbles, mash, smash, powder, liquid or any combination thereof. Furthermore, the fed of the present invention may comprise for example whole seeds, peas, beans, grains, any parts thereof and/or powder thereof. Preferably, the feed is in muesli like form i.e. containing particles or crumbles of different sizes. Physical forming of feeds (e.g. grinding, pelleting, smashing or chopping) will change the size of the feed particle.

To pelletize the mixture into pellets, employable is any ordinary method for producing feed pellets. For example, the feed mixture prepared as above is put into a commercially-available pelletizer, and pelletized therein at a suitable temperature (e.g. about 60-90°C) to give pellets having a desired shape and a desired hardness. The hardness of the pellets of the composition may be the same as that of pellets of any ordinary feed composition. The shape and the size of the pellets are not also specifically defined, provided that animals, e.g. broilers, can easily take the pellets.

The expander may also be used in animal feed, for example combined with a long-term conditioning, to enhance the feed nutrient utilization and enabling addition of coarsely ground grain or even whole grains. However, expanders are not necessarily needed in feed of the present invention. Rougher texture of feed activates the gizzard activity. Indeed, poultry fed with crumbles or mash-type feed of the invention have bigger gizzard compared to poultry of intensive meat production fed with pellets only.

The feed or composition of the invention may be fed to poultry any time throughout the rearing period, but, if desired, poultry may be fed with the feed or composition of the invention at predetermined intervals. Poultry may be fed with the feed composition of the invention every day. No additional feed is needed. In one embodiment of the invention the composition or animal feed is used to feed poultry for a period of up to 54 days prior to slaughter. In this way, the quality of the meat is significantly improved. In one embodiment the composition or animal feed of the invention is given to an animal daily during its whole life time (e.g. 44-54 days). In another specific embodiment of the invention, the composition or feed is for the period from 14-days to 54-days after birth. Still, in another specific embodiment of the invention, the composition or feed is for days 0-13 after birth. Most specifically, the poultry is fed from 0-day age to 13-days age with pellets, crumbles or a combination of pellets and crumbles. From 14-days age the feed may specifically be mash-type feed.

Most specifically, a composition or feed comprising
(i)
   a) wheat 10-20% (w/w)
   b) *Pisum sativum* 20-45% (w/w)
   c) oat (preferably pealed) 10-30% (w/w)
   d) *Zea mays* 4-10% (w/w)
(ii) vegetable oil and/or vegetable fat 1-10% (w/w)
   is used during days 0-13 after the birth.

Most specifically, a composition or feed comprising
(i)
   a) wheat 30-45% (w/w)
   b) *Pisum sativum* 10-30% (w/w)
   c) oat (preferably pealed) 10-30% (w/w)
   d) *Vicia faba* 5-20% (w/w)
(ii) vegetable oil and/or vegetable fat 1-10% (w/w)
   is used during days 14-50 after the birth.

To feed animals such as poultry with the feed or composition of the invention any ordinary feeding method may be utilized. For example, when the broilers are fed with the feed composition of the invention in an ordinary feeding manner, they may consume amounts of for example from 40 to 150 g/day. Most preferably the feed is available for poultry all the time. The amount of consumed feed depends on the consumption and need of energy in an animal.

The animal feed should be well digested and nutrients well absorbed from the intestine in order to achieve the economic growth result as well as the excellent meat quality.

Feeding broilers with the feed composition of the invention makes it possible to increase the raising rate of the broilers compared to conventional organic feeding and to produce more palatable and tasty meat. After feeding the poultry with the feed or composition e.g. for a period of up to 44-54 days prior to slaughter, the results can be monitored by any physical means of an animal, any piece of animal meat or skin, or by studying or quantifying the meat for example after preparing it for a meal (e.g. by frying, cooking, roasting).

The feeding method of the present invention may also be combined with other method steps utilized in the methods of growing, raising or breeding animals. In a specific embodiment, the growing or breeding method of the present invention may, in addition to the feeding method, comprise provision of natural lightning (e.g. according to the EU directives and standards), freely available feed and water and/or peat/straw/cutter sawdust underlay. In a more specific embodiment of the invention the growing or breeding method comprises the steps of providing specific feed or composition of the present invention, natural lightning, peat/straw/cutter sawdust underlay and freely available feed and water for poultry. Poultry may also have more space compared to poultry of intensive meat production. Therefore, poultry grown or breeded by the present invention are less aggressive and have less injuries compared to poultry of intensive meat production. Also, the broiler of the present invention is living about 25% longer than the broiler of the intensive meat production.

In the feeding method, the feed or composition of the present invention is preferably fed to poultry continuously every day to increase the productivity of poultry. In a specific embodiment feed and water are freely available for poultry. The feed composition of the invention is more effective compared to organic feeding compositions and therefore shorten the growing period of poultry, whereby the productivity of the poultry being fed with the feed composition is increased.

The composition or feed of the invention may be fed alone or together with any other feed or compositions to any livestock or domestic animals such as monogastric or polygastric production animals, beef animals, milk producing animals, horses, sheep, porks, pigs, poultry, fishes, cats or dogs. In one embodiment the animals are dependent on feeding by a human. Most preferably, the feed or composition of the invention is for poultry. In one embodiment of the invention the poultry is selected from the group consisting of broilers, chickens (e.g. breeders or layers), turkeys and game birds. Most specifically, the feed composition and the feeding method of the invention are suitable for any species of chickens or broiler chickens.

Poultry fed according to the present invention are healthier than poultry of intensive meat production: e.g. 30% less rejections, fewer feet problems and fewer too early deaths. Also, animals of the present invention have less stress, they are less aggressive and still the immunity of animals against diseases is better compared to intensive meat production.

It will be obvious to a person skilled in the art that, as the technology advances, the inventive concept can be implemented in various ways. The invention and its embodiments are not limited to the examples described above but may vary within the scope of the claims.

The present invention is illustrated by the following examples, which are not intended to be limiting in any way.

### EXAMPLES

### EXAMPLE 1

The poultry was given feed comprising (i) one or more sources of vegetable protein 60-90% (w/w) and (ii) vegetable oil and/or vegetable fat 1-10% (w/w) and wherein said feed is free of soybean. The feed also comprised vitamins and minerals to satisfy the nutrition requirements of the EU directives, regulations and standards and furthermore other conventional ingredients (e.g. coccidiostates and enzymes) used in animal feeds. The components mentioned above were mixed to prepare the above described feed. The resulting mixtures were put into e.g. a pelletizing machine or grinder to form e.g. pellets, capsules, crumbles, mash, smash, powder or liquid according to any conventional methods well-known to a person skilled in the art. This feed was fed for 44-54 days where after the poultry was slaughtered.

The conditions for growing broilers comprised the following:
- freely available feed and water
- natural lightning
- peat/straw/cutter sawdust
- heated poultry house.

### EXAMPLE 2

During days 0-13 after the birth the poultry was given feed comprising
(i)
   a) wheat 10-20% (w/w)
   b) *Pisum sativum* 20-45% (w/w)
   c) oat (preferably pealed) 10-30% (w/w)
   d) *Zea mays* 4-10% (w/w), and
(ii) vegetable oil and/or vegetable fat 1-10% (w/w).

From day 14 forward the poultry was given feed comprising
(i)
   a) wheat 30-45% (w/w)
   b) *Pisum sativum* 10-30% (w/w)
   c) oat (preferably pealed) 10-30% (w/w)
   d) *Vicia faba* 5-20% (w/w), and
(ii) vegetable oil and/or vegetable fat 1-10% (w/w).

Each feed sample also comprised vitamins and minerals to satisfy the nutrition requirements of the EU directives, regulations and standards and furthermore other conventional ingredients (e.g. coccidiostates and enzymes) used in animal feeds.

The components mentioned above were mixed to prepare the above described feed. The resulting mixtures were put into e.g. a pelletizing machine or grinder to form e.g. pellets, capsules, crumbles, mash, powder or liquid according to any conventional methods well-known to a person skilled in the art. This feed was fed for the poultry for a specific time of 1-13 or 14-54 days.

The poultry was slaughtered by day 44-54 after the birth.

The conditions for growing broilers were the same as described in Example 1.

### EXAMPLE 3

For comparison, broilers were fed with the feed comprising soybean and/or ingredients not falling within the scope of the feed of the invention i.e. feed not comprising (i) one or more sources of vegetable protein 60-90% (w/w) and/or (ii) vegetable oil and/or vegetable fat 1-10% (w/w) (e.g. the feed common in organic growing or in intensive meat production).

Otherwise the growing conditions were the same as in Examples 1 and 2 or as in organic growing or in intensive meat production.

### EXAMPLE 4

### Results of examples 1-3

Poultry fed according to the present invention were healthier than poultry of intensive meat production. This was determined for example by the percentage of rejections in slaughtering (i.e. broilers not suitable for meat production): there were about 30% less rejections in broilers of the present invention compared to broilers of intensive meat production.

The number of the broilers injured during the growing period was also counted. In the method of the present invention (45-54 days) fewer broilers were injured than during intensive meat production methods (32-39 days). For example broilers of the present invention had less feet problems than broilers of the intensive meat production. Also, poultry grown by the present invention were less aggressive and had fewer too early deaths compared to poultry of intensive meat production.

Also, the produced meat was weighed and resulted in 27-33 kg/m²/year meat (in comparison studies about 20 kg/m²/year in organic growing and about 40 kg/m²/year in intensive meat production).

In addition, the meat of the present invention had excellent hygienic quality.

### EXAMPLE 5

The meat from broilers which had been fed with the method or feed of the present invention (see examples 1-2) was prepared for eating purposes by pan-frying. The mouth feeling, taste and appearance of the meat of the present invention were different from the meat of intensive meat production (e.g. available on the market). The present meat was more palatable than the meat of intensive meat production. The texture of meat achieved by feeding poultry with the composition of the present invention was better. The poultry meat obtained by the present invention was similar to meat of game animals, for example usually broiler meat is smooth but the present invention highlighted the fibers of the meat. The chewing resistance of the present meat was higher compared to the conventional broiler meat. Also the taste of the meat of the present invention was stronger and/or better (e.g. more game animal meat like or more native breed chicken meat like) compared to the conventional broiler meat. High contents of omega fatty acids (e.g. omega-3 and -6 fatty acids) also contributed to the taste of the meat. The broiler meat of the present invention was more solid, juicier and contained more fat than the conventional broiler meat.

The meat of the present invention lost only about 14% of weight in pan-frying revealing that the water content of the meat was lower compared to the conventional broiler meat. In comparison, the weight loss of pan-fried intensive meat production broiler was about 25 %.

The meat of the present invention was pinker than the comparative usual broiler meat (being white).

In addition to broiler meat the consistence of the broiler skin was excellent for pan-frying, i.e. resulted in crispier texture than the conventional broiler skin. Furthermore, the skin tasted very good.

All the above data of examples 1-5 demonstrates that feeding poultry (e.g. broilers) with the feed composition of the present invention allows increased production of meat compared to growing of organic broilers and furthermore higher quality of meat compared to conventional intensive meat production.

## Claims

1. A method for feeding poultry, wherein the method comprises providing feed for the poultry, wherein the feed comprises
(i) one or more sources of vegetable protein 60-90% (w/w) and
(ii) vegetable oil and/or vegetable fat 1-10% (w/w) and wherein said feed is free of soybean.

2. A composition for animal feed comprising
(i) one or more sources of vegetable protein 60-90% (w/w) and
(ii) vegetable oil and/or vegetable fat 1-10% (w/w) and wherein said composition is free of soybean.

3. The method of claim 1 or the composition of claim 2, wherein one or more sources of vegetable protein is selected from the group consisting of wheat, plants belonging to *Fabaceae* family, oat, *Zea mays,* plants belonging to the *Lupinus* family and plants belonging to *Phaseolus* family.

4. The method or the composition of any one of claims 1-3, wherein sources of vegetable protein are wheat, *Pisum sativum,* oat, and *Vicia faba* or wheat, *Pisum sativum,* oat, and *Zea mays.*

5. The method or the composition of any one of claims 1-4, wherein the grains are pealed, not pealed or a combination thereof.

6. The method or the composition of any one of claims 1-5, wherein at least oat is pealed.

7. The method or the composition of any one of claims 1-6, wherein said feed or composition is free of genetically modified organisms (GMO).

8. The method or composition of any one of claims 1-7, wherein said feed or composition is free of animal proteins.

9. The method or composition of any one of claims 1-8, wherein said feed or composition is free of *Zea mays.*

10. The method or composition of any one of claims 1-9, wherein the feed or composition comprises:
(i)A
a) wheat 30-45% (w/w)
b) *Pisum sativum* 10-30% (w/w)
c) oat (preferably pealed) 10-30% (w/w)
d) *Vicia faba* 5-20% (w/w)
or
(i)B
a) wheat 10-20% (w/w)
b) *Pisum sativum* 20-45% (w/w)
c) oat (preferably pealed) 10-30% (w/w)
d) *Zea mays* 4-10% (w/w)

11. The method or composition of any one of claims 1-10, wherein the feed or composition further comprises minerals, vitamins, enzymes and/or coccidiostates.

12. The method or composition of claim 10, wherein the feed or composition comprising (i)A further comprises
(iii) crushed grain of *Brassica rapa* subsp. *oleifera* and/or *Brassica napus* subsp. *oleifera* 8-15% (w/w) and
(iv) minerals and feeding lime 1-5% (w/w).

13. The method or composition of claim 12, wherein the feed or composition further comprises vitamins, enzymes and/or coccidiostates.

14. The method or composition of any one of claims 1-13, wherein (ii) vegetable oil and/or vegetable fat is vegetable oil and present 3-7% (w/w).

15. Animal feed comprising the composition of any one of claims 2-14.

16. Animal feed of claim 15, which is in a form of pellets, capsules, crumbles, mash, smash, powder or liquid.

17. A use of the animal feed of claim 15 or 16 for feeding poultry.

18. The method or use of any one of claims 1, 3-14 or 17, wherein the poultry is selected from the group consisting of broilers, chickens, turkeys and game birds.

19. Poultry meat obtainable from poultry, which has been fed according to the method of any one of claims 1 or 3-14 or with the animal feed of claim 15 or 16.
